# EUROPEAN PATENT APPLICATION

(11) **EP 2 053 231 A2**
(43) Date of publication of application: **29.04.2009**
(21) Application number: 08017613.4
(22) Date of filing: 08.10.2008
(51) Int. Cl.: F02K 3/10, F02K 1/15

(54) **Gas turbine engine reheat fuel system**

(30) Priority: 23.10.2007 GB 0720703
(71) Applicant: Rolls-Royce plc, 65 Buckingham Gate London SW1E 6AT (GB)
(72) Inventor: Jones, David Ian, Bristol BS6 7JJ (GB)
(74) Representative: Gunn, Michael Alan

(57) **Abstract**

A gas turbine propulsion engine reheat system having a variable area exhaust nozzle (14) comprising a nozzle area control system including means for accelerating increases of nozzle area

## Description

This invention relates to a reheat fuel system for a gas turbine propulsion engine.

Reheat or afterburning is a method of augmenting the basic thrust of a gas turbine engine to improve performance. Additional fuel is introduced between the engine turbine and the jet pipe propelling nozzle, utilizing unburnt oxygen in the turbine exhaust gas to support further combustion of the additional fuel. The resultant increase in the temperature of the exhaust gas increases the velocity of the jet leaving the nozzle and also affects gas pressure in the jet pipe. Reheat fuel flow and propelling nozzle area functions are co-ordinated for satisfactory operation of the reheat system, so that the nozzle area is dependent upon the fuel flow at the burners or vice versa.

A gas turbine engine with a reheat system is provided with a variable area propulsion nozzle, which is closed during non-reheat operation. When reheat is selected the nozzle opens to provide an area suitable for the increased volume of the gas stream. This prevents any increase in pressure that could adversely affect the performance of the 'dry' engine, that is the engine operated in a non-reheat condition. Reheat can be used over a wide range of engine speeds.

The functional design of the reheat system is such that operation within the reheat range should not adversely affect the main engine performance. This should also be true for the transient operation of reheat. However, there are certain conditions whereby very fast nozzle opening is required to prevent surge. Unfortunately the control gain necessary for this is too large for adequate stability. The present invention seeks to solve this drawback and to significantly reduce the probability of engine surge during reheat selection or modulation by lowering the reheat working line during transient operation of reheat thereby giving improved surge margin.

According to one aspect of the present invention there is provided a gas turbine propulsion engine reheat system having a variable area exhaust nozzle comprising a nozzle area control system including means for accelerating increases of nozzle area changes.

According to a further aspect of the invention there is provided a gas turbine propulsion engine reheat system of the kind referred to wherein nozzle area is controlled by a servo system responsive to the difference between actual jet pipe pressure and a calculated jet pipe pressure derived from engine pressure parameters.

The invention will now be described in more detail with reference to the figures of the accompanying drawings, in which:
Figure 1 is an illustration of a prior art reheat control system, and
Figure 2 is an illustration of a reheat control system embodying the invention.

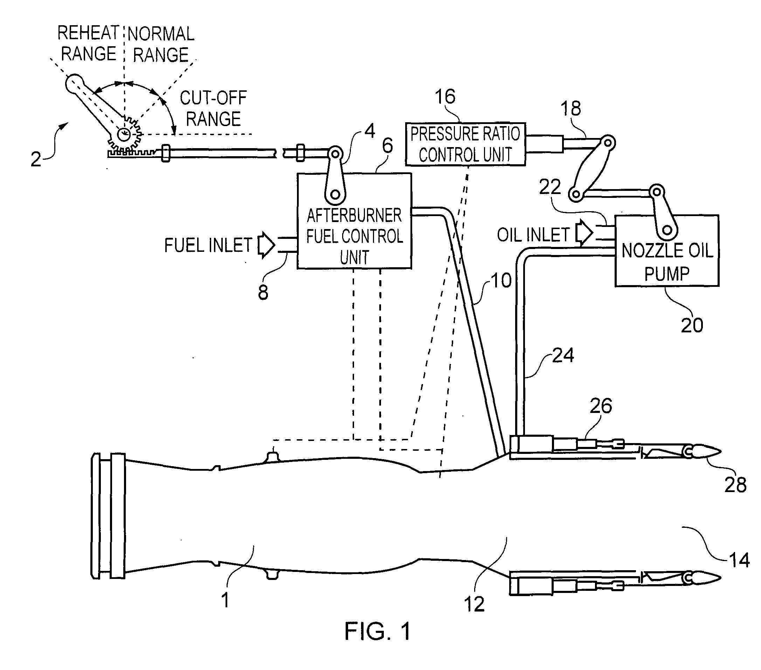

Referring now to Figure 1 there is shown a prior art reheat control system for a gas turbine propulsion engine 1. A pilot controls afterburner fuel flow by moving quadrant lever 2 into its reheat range. Lever 2 is coupled to a mechanical input 4 of reheat fuel control unit 6 to control the flow rate from fuel inlet 8 to supply pipe10 which supplies a reheat burners fuel manifold (not shown) located inside the jet pipe 12 downstream of the turbine exhaust of the propulsion engine. The jet pipe 12 is terminated At its downstream end by a variable area propulsion nozzle 14. The pilot controls the afterburner fuel flow or the nozzle area in conjunction with a pressure sensing, nozzle area control actuator16 comprising a pressure ratio sensing unit which has a mechanical output 18 which controls the area of nozzle 14. In this example the area control mechanical output 18 is coupled to a pump 20 which receives engine oil pressure at an inlet 22 and delivers an output oil pressure on line 24 to actuate nozzle area control jacks 26 which move the variable area leaves 28 of the nozzle 14.

When the reheat fuel flow is increased, the nozzle area is increased; when the reheat fuel flow decreases, the nozzle area is reduced. The pressure ratio control unit 16 operates to ensure that the pressure ratio across the turbine remains substantially unchanged and that the engine is unaffected by reheat operation, regardless of nozzle area and fuel flow. When reheat is selected fuel is supplied to the reheat burners. When this fuel is ignited jet pipe pressure P6 is increased. This alters the pressure ratio p3/p6 across the turbine and the area of nozzle 14 is automatically increased until the correct pressure ratio p3/p6 is restored. The nozzle area is progressively increased to maintain a satisfactory pressure ratio as reheat fuel flow is increased.

Control of the area of the propelling nozzle 14 by means of unit 16 involves a servo network including pressure bellows responsive to jet pipe pressure P6 on one side opposed by a pressure Px. This pressure Px is derived from engine P3, P2 and P0 engine pressures utilised to simulate (or calculate) a jet pipe pressure P6*. When these pressures P6 and P6* are equal the area of nozzle 14 is constant. When P6 is above the balancing pressure P6* the servo network of unit 16 commands the actuator 20 to open the propelling nozzle 14 until equilibrium is restored or conversely when Px is above the balanced pressure the unit 16 causes the propelling nozzle 14 to close until equilibrium is restored.

However, it has been found in practice that under certain adverse conditions the low pressure compressor stall line may be closer to the reheat steady state running line and consequently during a transient operation such as reheat selection or modulation the margin is eroded and a surge may occur.

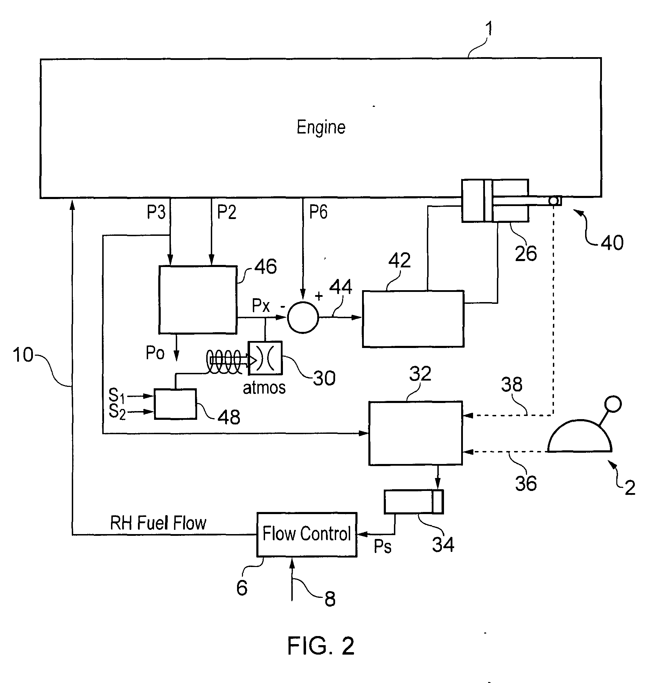

The solution to this problem is the control system of Figure 2 in which the reheat fuel & nozzle control unit is modified in order to change the reheat working line during reheat modulations, in an increasing sense, from light-up through to maximum reheat. In Figures 1 and 2 like parts carry like references.

The modified system of Figure 2 incorporates a solenoid operated venting valve 30 to vent air pressure in the nozzle control system. The solenoid valve 30 may be activated by one or more engine reheat parameters. The valve is normally biased shut so that when activated, or its actuating solenoid energised, the valve is opened to vent air from the nozzle servo system to atmosphere. The effect of activating the valve 30 is to increase the nozzle error signal transiently, so that the area of variable nozzle 14 is increased by a fixed amount leading to a consequent reduction in engine jet pipe pressure P6. In the drawing P0 represents ambient air pressure, P2 is the pressure of the low pressure compressor delivery air, P3 is the pressure of the high pressure compressor delivery air and P6 is the pressure in the jet pipe.

The configuration of the reheat and nozzle control unit is such that nozzle area is directly linked to the reheat flow control. Consequently any change in nozzle area during a transient operation causes a change in reheat fuel flow. A reduction in the jet pipe pressure P6 increases the reheat working line margin with a consequent reduction in probability of engine surge. Upon reaching the pilot demanded level of reheat the reheat transient signal decays and solenoid valve 30 is de-activated by a reheat generated signal and normal steady state reheat conditions prevail. According to the present invention reheat fuel flow is controlled by unit 6 as a function of a pressure input signal Ps. This signal is provided by an air signal generator 32 connected to receive a source of air pressure P3 from an high pressure compressor take-off, through a component 34 comprising a vortex diode and air capacitor the effect of which is to introduce a delay or lag to changes in the air signal from generator 32 to fuel flow control unit 6. The air signal generator 32 receives a first input 36 from the pilot's control lever 2 indicating a reheat demand and a second input 38 from a nozzle position feedback servo 40 indicating the position of the nozzle 14. Opening the nozzle 14 causes the reheat fuel flow 10 to increase after a lag induced by the vortex diode and air capacitor 34.

Nozzle position is controlled by a servo valve 42 (equivalent to pump 20 in Figure 1) driven by an error signal 44 which is the difference between pressures P6 and Px, wherein Px is a simulated signal derived from inputs P2 and P3 by an air potentiometer 46 and represents a calculated jet pipe pressure rather than the measured actual pressure. According to the invention the pressure Px is modified during nozzle excursions in order to protect the surge margin of the engine. The actuating solenoid of the valve is, therefore, energised by a transient signal generated by signal generator 48 during nozzle area changes essentially to accelerate opening of the nozzle to avoid potential surge conditions. A number of possibilities exist to act as input trigger signals S1 and Sx for this signal: one is to generate the solenoid signal dependent upon nozzle area, and another to generate the solenoid signal according to the rate of change of nozzle area. Several reheat parameters are suitable candidates for triggering the solenoid actuation, and may include separate triggering mechanisms for different manoeuvres. The invention is applicable to any engine having a reheat system where the reheat nozzle control is controlled by a closed loop control system.

Advantages of this invention include the ability to select reheat light-up and modulation throughout the flight envelope with improved surge resistance. Also the time to achieve reheat selection, at any level of reheat is significantly faster, and reheat modulations in an increasing sense, that is increases in reheat thrust level, are also faster.

## Claims

1. A gas turbine propulsion engine reheat system having a variable area exhaust nozzle (14) comprising a nozzle area control system including means for accelerating increases of nozzle area.

2. A gas turbine propulsion engine reheat system as claimed in claim 1 wherein the means for accelerating increases of nozzle area comprises a transient control signal.

3. A gas turbine propulsion engine reheat system as claimed in claim 1 or claim 2 wherein nozzle area is controlled by a servo system (42) responsive to the difference between actual jet pipe pressure (P6) and a calculated jet pipe pressure (Px) derived from engine pressure parameters.

4. A gas turbine propulsion engine reheat system as claimed in claim 3 wherein a nozzle area servo control signal is determined by the difference between the actual (P6) and calculated (Px) jet pipe pressure signals.

5. A gas turbine propulsion engine reheat system as claimed in claim 4 wherein the nozzle area servo control signal is increased during nozzle transients which increase nozzle area.

6. A gas turbine propulsion engine reheat system as claimed in claim 4 or claim 5 wherein the nozzle area servo control signal is increased during nozzle transients by venting the calculated jet pipe pressure (Px) to atmosphere.

7. A gas turbine propulsion engine reheat system as claimed in claim 6 wherein the pressure is vented to atmosphere by means of a valve (30) actuated in accordance with a nozzle area increase.

8. A gas turbine propulsion engine reheat system as claimed in claim 6 or claim 7 wherein the pressure is vented by an electrically actuated solenoid valve.
